Europäisches Patentamt

European Patent Office

Office européen des brevets

(11) Publication number: **0 363 493**
**A1**

# EUROPEAN PATENT APPLICATION
## published in accordance with Art. 158(3) EPC

(21) Application number: 89902813.8

(22) Date of filing: 23.02.89

(86) International application number:
PCT/JP89/00186

(87) International publication number:
WO 89/08017 (08.09.89 89/21)

(51) Int. Cl.5: **B29C 47/08**

(30) Priority: 25.02.88 JP 42864/88

(43) Date of publication of application:
18.04.90 Bulletin 90/16

(84) Designated Contracting States:
CH DE FR GB IT LI

(71) Applicant: YUGEN KAISHA HOSHI PLASTIC KOGYO
2267, Oaza-Hiruta, Yuzugamimura, Nasu-gun Tochigi-ken 324-04(JP)

(72) Inventor: HOSHI, Tadaichi
2267, Oaza-Hiruta Yuzugami-mura
Nasu-gun Tochigi-ken 324-04(JP)

(74) Representative: Bloch, Gérard
2, square de l'Avenue du Bois
F-75116 Paris(FR)

(54) PURGING AGENT FOR PLASTIC MOLDING MACHINES AND EXTRUDERS.

(57) A purging agent for plastic molding machines and extruders to be used for expelling resin remaining in a resin molding apparatus, which contains at least two hard materials having a hardness of 5 or more and being capable of exerting scraping and abrading actions.

EP 0 363 493 A1

DESCRIPTION

PURGING AGENT FOR MOLDING AND EXTRUDING MACHINES FOR PLASTICS

Technical Field

This invention relates to a purging agent used for purging a molding or extruding machine for plastics, expelling plastics remaining in the machine out of the same.

Background Art

The plastic molding apparatus used for extrusion molding or injection molding of plastics generally comprises a cylinder for melting the plastics, a screw for extruding the plastic, etc. At the end of the molding, some molten plastics remain in the apparatus, adhering to the interior of the cylinder and/or the screw. Therefore, when it is required to change the materials or colors of the plastics for further molding, defective molded pieces would be produced if the plastics remaining in the apparatus had not been thoroughly removed from the apparatus preliminarily.

For this reason, purging agents are used as a cleaner to remove the remaining plastics. The purging agent is charged into the apparatus to remove the remaining plastics, scraping them off from its interior.

A purging operation is generally attained by utilizing the thermoplastic resins are adhesive to a metal surface at a high temperature and are not adhesive to the metal surface at a low temperature. More particularly, the plastics to be removed are allowed to adhere to a hot inner surface of the cylinder and a hard purging agent of high viscosity is supplied to a cold screw to let the agent scrape the plastics off the inner surface.

Acrylic resins or polyethylenes are used for purging agents. Some purging agent contains glass fibers etc, mixed therein to enhance the scraping-off effect.

Today, plastic molding is carried out on the various kind-small lot production basis. A purging operation is necessitated whenever the molding items are changed. To enhance the production efficiency, simplification of the purging operation is highly demanded.

However, conventional purging agents is not powerful to expel the remaining plastics, because they scrape off the plastic remaining in the molding machine solely due to the hardness of the plastics composing the purging agent. They, therefore, require much time and a considerable amount of purging agents are to be used.

It further requires much time and plastics to remove the purging agents when the purging agent themselves are purged by the plastics to be charged for further molding.

For this reason, glass fibers etc. are used in addition with the plastics to increase the expelling power of the purging agent. However, sufficient effect has not been attained.

It is an object of the present invention to provide a purging agent of excellent expelling ability for plastic molding or extruding machines, which is capable of reducing the amount of the purging agent to be used and shortening the purging operation, improving the production efficiency very much.

Disclosure of Invention

The object of this invention is achieved as follows: More specifically, the purging agent of the present invention is characterized in that it contains at least two kinds of hard materials having a hardness of five degree or higher.

The hard materials employable in this invention are those having a Mohs hardness of five degreee or higher.

Mohs hardness is an experiential one used to determine the hardness in comparison with the hardnesses of ten reference minerals, and a Mohs hardness of five degree or higher corresponds to a hardness of apatite or harder.

The hard materials having a Mohs hardness of five or higher degree can easily expel the plastics remaining in the molding machine. The materials having Mohs hardness of four or lower degree, on the other hand, causes leftovers. The materials as hard as Mohs hardness of six or higher are more preferable, but materials having Mohs hardness of nine or higher degree will likely cause scratches on the molding machine if the material of the machine is not hard enough.

The purging agent of this invention includes at least two kinds of hard materials, such as those having a scraping function and those having an abrasive function.

To enhance the scraping and abrasive effects, it is preferable that hard materials of different weight-average particle size be included. The hard material of a larger particle size first scrapes off the plastics to be removed, and then the hard material of smaller particle size grinding the plastic to be removed to accelerate the expelling of the plastics.

The average particle sizes of the hard materials vary with surface roughness or configuration of the particles and are not critical in the present invention as far as they may develop the effects as mentioned above. However, it is normally preferable that the average particle sizes of the smaller hard materials be 15 to 30 um and those of the larger hard materials be 140 to 220 um.

To attain the purging operation efficiently, the temperature at which the purging operation is done is generally selected to be substantially the same as the molding temperature of the plastic to be expelled or the molding temperature of the plastic to be charged after the purging operation, or between the two temperatures.

The hard materials to be used for the purging agent of this invention are selected, considering the easiness with which the hard materials scrape off the plastics to be removed at a temperature of purging operation.

Although the hard materials are not limited to, but may be either inorganic materials or organic materials, it is desirable that they be selected from a group consisting of quick sand, finely-crushed glass, silica and/or iron powder.

Quick sand has properties similar to those of common glass. It has a large content of silicate component and is silicate glass powder having a hardness of 6 to 7. Quick sand may be used widely for plastics to be molded at a higher temperature and for plastics to be molded at a rather lower temperature.

Silica is as hard as 7 to 8 degree and has a specific gravity of 2.6 to 2.7. Silica is therefore used for plastics which are hard to be removed and to be molded at a higher temperature.

Iron powder is not so hard as glass materials, but it hardly scur the apparatus and can be used widely.

Since the glass powder has a high hardness, it is mostly used in combination with quick sand for reinforcement of the same rather than used alone:

The hard materials can be used in combination of the same or different kind of materials.

The contents of the hard materials are not critical and may be varied depending on the products.

It is desirable that the hard materials be dispersed in a thermoplastic resin.

It is necessary that the thermoplastic resin employable for this invention retain the hard materials without letting the materials settle down even when the resin is softened at the molding temperature of the resin to be removed. Otherwise, it would be hard to uniformly disperse the hard materials within the resin acting as a binder, which will greatly lower the expelling ability of the hard materials. Although the thermoplastic resin needs not be harder than the plastics to be purged, it is of course preferable that the resin be harder.

A thermoplastic resin may be used alone or may be used in combination with one or more resins. It, however, is desirable to contain a polyethylene and/or an acrylic resin.

It is possible to make the hard materials not settle down by selecting appropriate resins, such as high-density polyethylenes, low-density polyethylenes or acrylic resins. For example, high-density polyethylenes may suitably be employed for the plastics to be expelled which are to be molded at a temperature of 250°C to 350°C, whilst low-density polyethylenes may be employed for the plastics to be expelled which are to be molded at a temperature of 150°C to 250°C. These resins may be blended appropriately according to usage conditions.

The purging agent of the present invention may preferably contain a surface active agent. The surface active agent enhances the scraping and abrading actions of the purging agent by the foaming phenomenon caused when the agent is in use as well as it exerts its inherent detergent action.

To disperse the hard material uniformly in the purging agent of the present invention, it is desirable to use a blending medium such as blend oil. Otherwise, hard materials of a large specific gravity would settle down, lowering the scraping and abrading actions. Most portion of the blending medium will escape from the purging agent by the heat caused by blending and only a slight amount of blending medium will remain in the purging agent. scattered by heat of mixture and results in a very small quantity as an ingredient of the purging agent.

It is desirable that the purging agent of the present invention be provided in the form of pellets. Pellets are easy to handle and are free from getting a charging inlet dirty.

The purging agent of the present invention may, for example, be manufactured as follows:

Hard materials, one or more thermoplastic resins and a surface active agent are charged into a mixing machine. A blending medium such as a blending oil is also charged to disperse the composition uniformly and the resultant mixture is subjected to mixing for 20 to 30 minutes. The mixture is then processed by an extruder.

The extruder comprises a motor with a reduction gear as a driving source, a heating cylinder in a cylindrical form and adapted to be heated by an external heater for temperature control, a screw provided inside the heating cylinder and adapted to be driven by the motor through the reduction gear to extrude the mixture within the heating cylinder, and a die having 10 to 40 holes of about 4mm in diameter, which die allows the mixture molten in the cylinder and extruded by the screw from the cylinder to pass therethrough.

Thus, the mixture charged into the extruder from the mixing machine is heated in the heating cylinder and softened to be extruded in the form of strands through the holes of the die by the action of the screw. This procedure takes 5 to 15 seconds.

The so formed strands are cooled by water in a tank for 5 to 7 seconds.

The cooled strands are then taken out from the tank and are subjected to cutting into pieces of about 3 mm long by a pelletizer, while being swished off water.

The purging agents in the form of pellets are packed in a bag. A bag normally holds 25 kg, but as the purging agent of this invention is foamed, a single bag can hold only about 15 kg. The top of the bag is closed by a sewing machine for shipping.

The conventional purging agent effects scraping by utilizing the hardness of the resin used as the purging agent, whilst the purging agent of the present invention employs the hard materials having a hardness of 5 or more to effect scraping. As the temperature gets higher, the resin gets softened and loses scraping action. However, the hard material is harder than the resin and it is not influenced by the temperature.

The purging agent of this invention has an abrading action as well as the scraping action. The hard material of a larger particle size has an action of scraping the plastic to be removed from the machine, and the hard material of a smaller particle size has an action of abrading the machine. With these actions, plastics difficult to be removed could be thoroughly expelled.

According to this invention, suitable high-density polyethylenes, low-density polyethylenes and/or acrylic resins may be selected alone or in combination according to the molding temperature of the plastics to be expelled or the specific gravities of the hard materials employed, so that the hard materials can be uniformly dispersed·in the resins during the purging operation without settling down. Thus, a purging agent excellent in the scraping action can be obtained.

Since the purging agent according to the present invention has substantially improved expelling action as compared with the conventional purging agents, the amount of the purging agent to be employed can be reduced, and the amount of the plastic material for·next molding which is used for expelling the purging agent, which is in turn to be expelled for the next molding, can be reduced, too.

As described above, the purging agent of the present invention enables reduction of the amount of the purging agent to be employed and the operation time for the purging, lowering the cost of the purging operation.

Examples

Examples of the present invention will now be described, but this invention is not limited to these examples.

A purging agent of the following composition by weight was prepared.

Example-1

| | |
|---|---|
| polyethylene (density=0.95) | 75% |
| quick sand (weight-average particle size 27 um) | 10 |
| quick sand (weight-average particle size 160 um) | 10 |
| general glass powder | 5 |
| surface active agent | |
| (based on total weight of quick sand) | 2 to 5 |
| blending oil | a slight amount |

Example-2

| | |
|---|---|
| polyethylene (density=0.95) | 50% |
| polyethylene (density=0.963) | 20 |
| quick sand (weight-average particle size 27 um) | 10 |
| quick sand (weight-average particle size 160 um) | 10 |
| general glass powder | 5 |
| silica | 5 |
| surface active agent | |
| (based on total weight of quick sand) | 2 to 5 |
| blending oil | a slight amount |

Comparative Example-1

| | |
|---|---|
| polyethylene (density=0.945) | 100% |

Comparative Example-2

| | |
|---|---|
| polyethylene (density=0.945) | 75% |
| polyethylene (density=0.965) | 25 |

Demonstration tests for expelling a polypropylene resin whose molding temperature is 210 to 280°C were conducted using the purging agents of Example-1 and Comparative Example-1 in the same amounts. The time needed for expelling the resin was shortened by about 30 minutes with the purging agent of Example-1 as compared with the purging agent of Comparative Example-1. Further, another expelling demonstration test was conducted by using half the amount of the purging agent of Example-1 used in the former test. It took only three minutes more to expel the plastic.

Demonstration tests for expelling a polycarbonate resin whose molding temperature is 300°C or higher were conducted, using the purging agents of Example-2 and Comparative Example-1 in the same amounts. The time needed for expelling was shortened with the purging agent of Example-2 by about 40 minutes as compared with the purging agent of Comparative Example-2.

A demonstration test for expelling a polycarbonate resin instead of a polypropylene resin was conducted using the purging agent of Example-1, whilst a demonstration test for expelling a polypropylene resin instead of a polycarbonate resin was conducted using the purging agent of Example-2. In each case, it took about 7 minutes more as compared with the respective former test.

Industrial Applicability

The purging agent for plastic molding and extruding machines according to the present invention enables the expelling time to be substantially shortened and the amount of the purging agent to be used to be reduced remarkably. The resins to be used in the purging agnet may be selected according to the molding temperature of the plastics to be expelled to provide a purging agent of excellent expelling effect. This will improve the productivity of the molding articles to a great extent.

CLAIMS

1. A purging agent for molding and extruding machines for plastics which is characterised in that it contains at least two hard materials having a hardness of five or more.

2. A purging agent as claimed in claim 1, wherein said at least two hard materials have a scraping action and an abrading action, respectively.

3. A purging agent as claimed in claim 1 or 2, wherein said at least two hard materials have different weight-average particle sizes, respectively.

4. A purging agent as claimed in claim 1, 2 or 3, wherein said hard materials are selected from quick sand, glass powder, silica and/or iron powder.

5. A purging agent as claimed in claim 1, 2, 3 or 4, wherein said hard materials are dispersed in a thermoplastic resin or resins.

6. A purging agent as claimed in claim 5, wherein said thermoplastic resin or resins comprise at least a polyethylene resin and/or an acrylic resin.

7. A purging agent as claimed in claim 1, 2, 3, 4, 5 or 6, wherein said purging agent contains a surface active agent.

8. A purging agent as claimed in claim 1, 2, 3, 4, 5, 6, 7 or 8, wherein said purging agent contains a blending medium.

9. A purging agent as claimed in claim 1, 2, 3, 4, 5, 6, 7, 8 or 9, wherein said purging agent is in the form of pellets.

# INTERNATIONAL SEARCH REPORT

International Application No PCT/JP89/00186

## I. CLASSIFICATION OF SUBJECT MATTER (if several classification symbols apply, indicate all) 6

According to International Patent Classification (IPC) or to both National Classification and IPC

Int. Cl$^4$   B29C47/08

## II. FIELDS SEARCHED

Minimum Documentation Searched 7

| Classification System | Classification Symbols |
|---|---|
| IPC | B29C45/17, 45/24, 47/08 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 50-58 (Mitsubishi Monsanto Chemical Co.) 6 January 1975 (06. 01. 75) (Family: none) | 1-9 |
| Y | JP, A, 50-102654 (Mitsubishi Monsanto Chemical Co.) 14 August 1975 (14. 08. 75) (Family: none) | 1-9 |
| Y | JP, A, 53-130761 (Denki Kagaku Kogyo Kabushiki Kaisha) 15 November 1978 (15. 11. 78) (Family: none) | 1-9 |
| Y | JP, A, 55-123669 (Nippon Carbide Industries Co., Inc.) 24 September 1980 (24. 09. 80) (Family: none) | 1-9 |
| Y | JP, A, 59-124999 (Dainichiseika Color & Chemicals Mfg. Co., Ltd.) | 1-9 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| May 11, 1989 (05. 11. 89) | May 29, 1989 (29. 05. 89) |
| International Searching Authority | Signature of Authorized Officer |
| Japanese Patent Office | |

Form PCT ISA 210 (second sheet) (January 1985)

**FURTHER INFORMATION CONTINUED FROM THE SECOND SHEET**

19 July 1984 (19. 07. 84)
(Family: none)

---

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers ........ ..., because they relate to subject matter not required to be searched by this Authority, namely:

2.☐ Claim numbers .........., because they relate to parts of the international application that do not comply with the prescribed requirements to such an extent that no meaningful international search can be carried out, specifically:

3.☐ Claim numbers ........ ...., because they are dependent claims and are not drafted in accordance with the second and third sentences of PCT Rule 6.4(a).

---

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)